# EUROPEAN PATENT SPECIFICATION

(11) **EP 4 145 101 B1**
(45) Date of publication and mention of the grant of the patent: **03.07.2024**
(21) Application number: 21876746.5
(22) Date of filing: 14.12.2021
(51) Int. Cl.: G01M 9/04, G01M 7/00, G01M 15/14, G01H 13/00, G01M 9/06, G10K 11/16

(54) **TEST PLATFORM FOR COMPREHENSIVE PERFORMANCE OF ACOUSTIC LINER**
TESTPLATTFORM FÜR DIE UMFASSENDE LEISTUNG EINER AKUSTISCHEN AUSKLEIDUNG
PLATE-FORME DE TEST POUR PERFORMANCE GLOBALE DE REVÊTEMENT ACOUSTIQUE

(30) Priority: 13.07.2021 CN 202110787602
(43) Date of publication of application: 08.03.2023
(73) Proprietor: Beihang University, Beijing 100191 (CN)
(72) Inventor: LI, Xiaodong, Beijing 100191 (CN); ZHENG, Mingyang, Beijing 100191 (CN); CHEN, Chao, Beijing 100191 (CN)
(74) Representative: Herzog IP Patentanwalts GmbH
(86) International application number: PCT/CN2021/137781
(87) International publication number: WO 2023/284242

(56) References cited:
- CN-A- 101 571 448
- CN-A- 111 044 251
- CN-A- 111 289 257
- CN-A- 112 595 409
- CN-A- 113 532 827
- US-A- 5 684 251
- SPILLERE ANDRÉ MN ET AL: "Design of a single degree of freedom acoustic liner for a fan noise test rig", INTERNATIONAL JOURNAL OF AEROACOUSTICS, [Online] vol. 20, no. 5-7, 16 June 2021 (2021-06-16), pages 708-736, XP093001440, ISSN: 1475-472X, DOI: 10.1177/1475472X211023831 Retrieved from the Internet: URL:http://journals.sagepub.com/doi/full-x ml/10.1177/1475472X211023831> [retrieved on 2022-11-23]
- Jones Michael G ET AL: "A Review of Acoustic Liner Experimental Characterization at NASA Langley", , 1 April 2020 (2020-04-01), pages 1-57, XP093001445, Retrieved from the Internet: URL:https://ntrs.nasa.gov/api/citations/20 200003112/downloads/20200003112.pdf [retrieved on 2022-11-23]
- June Jason ET AL: "Diagnostic Techniques to Elucidate the Aerodynamic Performance of Acoustic Liners", , 7 January 2017 (2017-01-07), pages 1-124, XP093034355, Langley Research Center Retrieved from the Internet: URL:https://ntrs.nasa.gov/api/citations/20 170007193/downloads/20170007193.pdf [retrieved on 2023-03-23]
- XIANGHAI QIU et al.: "Investigation of straightforward impedance eduction method on single- degree-of-freedom acoustic liners", Chinese Journal of Aeronautics, vol. 31, no. 12, 31 December 2018 (2018-12-31), page 2224, XP055945510, ISSN: 1000-9361

## Description

### FIELD OF THE INVENTION

The present disclosure relates to the technical field of aerodynamic and acoustic measurement, in particular to a comprehensive performance test platform for acoustic liner.

### BACKGROUND OF THE INVENTION

The acoustic liner of aeroengine nacelle is an effective passive noise reduction structure. Due to the perforation on the surface, it's inevitable for acoustic liners to increase the aerodynamic drag compared with the smooth wall, which causes an additional fuel consumption during a flight. In addition, the effect of incident sound wave will bring additional drag increase, and the noise with high sound intensity will lead to acoustic liner fatigue and then induce acoustic resonance, which will bring potential safety hazards to the structure of the compression system.

In the existing method for measuring the performance parameters of the acoustic liner, the measured acoustic liner is usually flush with the lower wall surface of a flow tube, the flow drag is measured by using a force measuring mechanism, and the acoustic impedance is measured by using the microphone array on the opposite wall of the acoustic liner. The existing research on the flow drag of acoustic liner usually only focuses on the influence of the surface configuration of acoustic liner, but since the acoustic liner is a sound absorbing structure, the incoming sound wave will also influence the drag of acoustic liner. In addition, the existing tests of acoustic liner drag and of acoustic impedance are separate each other. However, if the two tests are not carried out at the same time, the conditions cannot be completely consistent, so that the measured drag and acoustic impedance can not correspond with each other, which is not conducive to synthetically designing the acoustic liner in aerodynamic and acoustic.

SPILLERE ANDRE MN ET AL: "Design of a single degree of freedom acoustic liner for a fan noise test rig" discusses acoustic liners are an essential part of noise reduction technologies commonly applied in aircraft turbofan engines. Fan noise suppression can be achieved by selecting an appropriate liner design with optimal acoustic impedance at the blade passing frequency. Great efforts have been made not only to improve experimental characterization and numerical methods for acoustic liners, but also to understand noise generation mechanisms, which ultimately impacts on the liner design itself. To gain confidence in the liner design process, a liner barrel was developed and fabricated for the Fan Noise Test Rig located at the University of Sao Paulo. To this end, analytical methods were used to determine the optimal acoustic impedance for the Fan Noise Test Rig, and a flat test sample was fabricated for experimental characterization with flow using both in-situ and impedance eduction techniques at the Federal University of Santa Catarina. A liner barrel of same nominal geometry was fabricated and placed at the Fan Noise Test Rig, and a modal decomposition indicated that the Tyler-Sofrin mode has been successfully suppressed at the first blade passing frequency. Numerical predictions of liner transmission loss considering the flat sample impedance showed good agreement with experimental results.

Jones Michael G ET AL: "A Review of Acoustic Liner Experimental Characterization at NASA Langley" discusses a review of tools used by the NASA Langley Research Center over the last four decades to experimentally characterize acoustic liners for aircraft noise reduction. Descriptions of past and present NASA test rigs are included to provide context for the application of data acquisition and analysis methods. These test rigs range from simple applications of a raylometer to a waveguide with detailed control over higher-order modes. Methods for impedance eduction based on data acquired in these test rigs are explored in some detail. Strengths and weaknesses of each data acquisition and analysis method are presented, as well as current practices applied in the NASA Langley Liner Technology Facility.

XIANGHAI QIU et al.: "Investigation of straightforward impedance eduction method on single- degree-of-freedom acoustic liners" discusses in order to address the current aircraft noise problem, the knowledge of impedance of acoustic liners subjected to high-intensity sound and grazing flow is of crucial importance to the design of high-efficiency acoustic nacelles. To this end, the present study is twofold. Firstly, the StraightForward impedance eduction Method (SFM) is evaluated by the strategy that the impedance of a liner specimen is firstly experimentally educed on a flow duct using the SFM, and then its accuracy is checked by comparing the numerical prediction with the measured wall sound pressure of the flow duct. Secondly, the effects of grazing flow and high-intensity sound on the impedance behavior of two single-layer liners are investigated based on comparisons between educed impedance and predictions by three impedance models. The performance of the SFM is validated by showing that the educed impedance leads to excellent agreement between the simulation and the measured wall sound pressure for different grazing flow Mach numbers and Sound Pressure Levels (SPLs) and over a frequency range from 3000 Hz down to 500 Hz. The grazing flow effect generally has the tendency that the acoustic resistance exhibits a slight decrease before it increases linearly with an increase in Mach, predicted successfully by the sound-vortex interaction theoretical model and the Kooi semi-empirical impedance model. However, the Goodrich semi-empirical impedance model gives only a simple linear relation of acoustic resistance starting from Mach zero. Additionally, when the SPL increases from 110 to 140 dB in the present investigation, the acoustic resistance exhibits a significant increase at all frequencies in the absence of flow; however, the resistance decreases slightly under a grazing flow of Mach 0.117. It indicates that the SPL effect can be greatly inhibited when flow is present, and the grazing flow effect can be reduced partly as well at a relatively high SPL.

CN 112595409 A discloses an acoustic liner mounting device applied to a microphone array method acoustic impedance test system. The acoustic liner mounting device comprises an acoustic liner mounting groove and an acoustic liner which are connected with an acoustic liner experiment test section; ear plates are arranged at the two ends of the top surface of the acoustic liner mounting groove, and areembedded into the acoustic liner experiment test section; steps matched with the acoustic liner are arranged on the ear plates on the two sides, and the acoustic liner is installed in the acoustic liner mounting groove through the steps. the top surface of the acoustic liner mounting groove is flush with the acoustic liner experiment test section, and the airflow surface of the acoustic liner isflush with the airflow surface of the acoustic liner mounting groove. According to the acoustic liner mounting device applied to the microphone array method acoustic impedance test system, the problems of low assembly precision, poor sealing performance and low measurement precision of an existing acoustic liner mounting device are well solved.

June Jason ET AL: "Diagnostic Techniques to Elucidate the Aerodynamic Performance of Acoustic Liners" discusses in support of Topic A.2.8 of NASA NRA NNH10ZEA001N, the University of Florida (UF) has investigated the use of flow field optical diagnostic and micromachined sensor-based techniques for assessing the wall shear stress on an acoustic liner. Stereoscopic particle image velocimetry (sPIV) was used to study the velocity field over a liner in the Grazing Flow Impedance Duct (GFID). The results indicate that the use of a control volume based method to determine the wall shear stress is prone to significant error. The skin friction over the liner as measured using velocity curve fitting techniques was shown to be locally reduced behind an orifice, relative to the hard wall case in a streamwise plane centered on the orifice. The capacitive wall shear stress sensor exhibited a linear response for a range of shear stresses over a hard wall. PIV over the liner is consistent with lifting of the near wall turbulent structure as it passes over an orifice, followed by a region of low wall shear stress.

### SUMMARY OF THE INVENTION

In order to solve at least one of the above technical problems, the present disclosure provides a comprehensive performance test platform for acoustic liner.

According to the present invention, the comprehensive performance test platform for acoustic liner comprises a flow duct and a test chamber, according to claim 1.

Optionally, the wall surface of the acoustic source section is provided with N loudspeaker arrays and N is an integer not less than 1; and
a loudspeaker array include M loudspeakers, which are arranged on the wall surface of the acoustic source section in a circumferential direction of the acoustic source section, and M is an integer not less than 1.

Optionally, strain gauges are provided at the perforated plate and at a honeycomb cavity of the measured acoustic liner.

Optionally, an adjustment mechanism is disposed in the test chamber and the adjustment mechanism is connected to the drag balance.

Optionally, the flow duct comprises a first anechoic termination and a second anechoic termination, wherein, the first anechoic termination is set upstream of the acoustic source section and the second anechoic termination is set downstream of the test section;
the wall surface of each anechoic termination is provided with at least two symmetrical wedge-shaped structures and sound-absorbing materials are provided in a cavity of the wedge-shaped structure; and
a perforated plate with wire mesh forms an interface between the wedge-shaped structure and the anechoic termination.

Optionally, the first anechoic termination, the acoustic source section, the test section and the second anechoic termination are connected through flanges.

Optionally, the test platform comprises a displacement mechanism and a flow rate meter, wherein, the displacement mechanism comprises a first slide rail and a second slide rail, the first slide rail and the second slide rail are respectively connected to the flow rate meter, and the flow rate meter is configured to measure the airflow velocity in the flow duct;
when the first slide rail is driven by a motor, the first slide rail move the flow rate meter in a first direction; and
when the second slide rail is driven by the motor, the second slide rail move the flow rate meter in a second direction.

Optionally, when it is need to measure the airflow velocity in the flow duct, the first slide rail and/or the second slide rail causes the flow rate meter to extend into the flow duct;
when it is not need to measure the airflow velocity in the flow duct, the first slide rail and/or the second slide rail causes the flow rate meter to extend out of the flow duct; and
a sealing element is arranged where the flow rate meter and the flow duct are connected.

Optionally, the wall surface of the test section is provided with a watch window.

The technical solutions provided by the embodiments of the present disclosure at least include the following beneficial effects.

Based on the comprehensive performance test platform for acoustic liner provided by the embodiments of the present disclosure, the stress of the measured acoustic liner under high sound intensity can be measured by using the strain gauge arranged on the measured acoustic liner, the drag of the measured acoustic liner can be measured by using the drag balance and the acoustic performance parameters of the measured acoustic liner can be calculated based on the sound pressure data obtained by the microphone arrays. That is, with the comprehensive performance test platform for acoustic liner provided by the embodiments of the present disclosure, the stress, the drag and the acoustic performance parameters of the measured acoustic liner can be measured simultaneously, which overcomes the problem of inaccurate experimental data obtained in inconsistent experimental conditions caused by conventional separate acoustic liner tests.

### BRIEF DESCRIPTION OF THE DRAWINGS

In order to more clearly explain the technical solutions according to embodiments of the present disclosure or the prior art, the following will briefly introduce the drawings required to be used in the description of the embodiments or the prior art. It is obvious that the drawings in the following description are included in the specification and form a part of the specification. For those skilled in the art, other drawings can also be obtained from these drawings without creative effort. For ease of description, only parts related to the present disclosure are shown in the drawings.
Figure 1 is a schematic diagram of comprehensive performance test platform for acoustic liner provided by the embodiments of the present disclosure.
Figure 2 is another schematic diagram of comprehensive performance test platform for acoustic liner provided by the embodiments of the present disclosure.
Figure 3 is a schematic diagram of test section of the comprehensive performance test platform for acoustic liner provided by the embodiments of the present disclosure.
Figure 4 is a schematic diagram of a wall surface of the test section of the comprehensive performance test platform for acoustic liner provided by the embodiments of the present disclosure.
Figure 5 is a schematic cross-sectional view of wedge-shaped structure of the comprehensive performance test platform for acoustic liner provided by the embodiments of the present disclosure.
Figure 6 is a schematic diagram of displacement mechanism 107 of the comprehensive performance test platform for acoustic liner provided by the embodiments of the present disclosure.
Figure 7 is a schematic diagram of flow rate meter 108 of the comprehensive performance test platform for acoustic liner provided by the embodiments of the present disclosure.

List of reference numbers: 100-flow duct, 101-first microphone array, 102-second microphone array, 103-third microphone array, 104-pressure probe array, 105-wedge-shaped structure, 151-triangular support plate, 106-perforated plate, 107-displacement mechanism, 108-flow rate meter, 109-sealing element, 110-bracket, 111-pedestal, 112-watch window, 113-flange, 171-first slide rail, 172-second slide rail, 173-support of slide rail, 174-sleeve, 175-connecting rod, 176-slider, 177-fixed block, 178-electric motor, 200-test chamber, 201-measured acoustic liner, 211-strain gauge, 202-acceleration transducer, 203-drag balance, 204-bearing tray, 205-adjustment mechanism, 301-loudspeaker array.

### DETAILED DESCRIPTION OF THE INVENTION

In order to make the purpose, technical solutions and advantages of the embodiments of the present disclosure more clear, the technical solutions of the embodiments will be clearly and completely described below in combination with the drawings of the embodiments. Obviously, the described embodiments are part, not all, of embodiments of the present disclosure. The embodiments of the present disclosure and the features in the embodiments can be combined with each other without conflict. Based on the embodiments in the present disclosure, all other embodiments obtained by those skilled in the art without inventive work are within the scope of protection of the present disclosure.

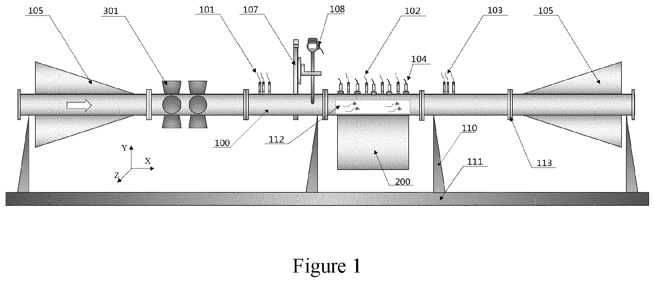

Embodiments of the present disclosure provide a comprehensive performance test platform for acoustic liner. As shown in Fig. 1, the test platform comprises:
a flow duct 100 and a test chamber 200, wherein the flow duct 100 is configured to provide a channel for airflow;
the flow duct 100 comprising an acoustic source section and a test section, wherein the test section is located behind (downstream of) the acoustic source section;
wherein a wall surface of the acoustic source section is provided with a loudspeaker array 301;
wherein the test chamber 200 is arranged on the test section, and the interior of the test chamber 200 is provided with an acoustic liner to be measured 201, an acceleration transducer 202 and a drag balance 203; the measured acoustic liner 201 is provided with a strain gauge 211 and is connected to the acceleration transducer 202; and the drag balance 203 is connected to a bearing tray 204 and the bearing tray 204 is fixedly connected to the measured acoustic liner 201; and
wherein the measured acoustic liner 201 is flush with (abut) the wall surface of the test section, a first microphone array 101 is provided on the wall surface of the test section in front of (upstream of) the measured acoustic liner 201, a second microphone array 102 is provided on the wall surface of the test section opposite or adjacent to the measured acoustic liner 201, and a third microphone array 103 is provided on the wall surface of the test section behind (downstream of) the measured acoustic liner 201.

The comprehensive performance test platform for acoustic liner provided by the embodiments of the present disclosure comprises a flow duct 100 and a test chamber 200. For example, the flow duct 100 can be a straight pipe, the cross section of the flow duct 100 can be rectangular and the airflow can flow along the flow duct 100. As shown in Fig. 1, the arrow direction is the flow direction of airflow and acoustic wave. As shown in Fig. 1, the flow duct 100 comprises an acoustic source section and a test section, with the test section located downstream of the acoustic source section. That is, the acoustic source section is located upstream of the test section, so as to provide an incident sound wave for the airflow through the acoustic source section. For example, the flow duct 100 can be formed by joining a plurality of pipe units, and the acoustic source section and the test section can be joined as pipe units to form the flow duct 100.

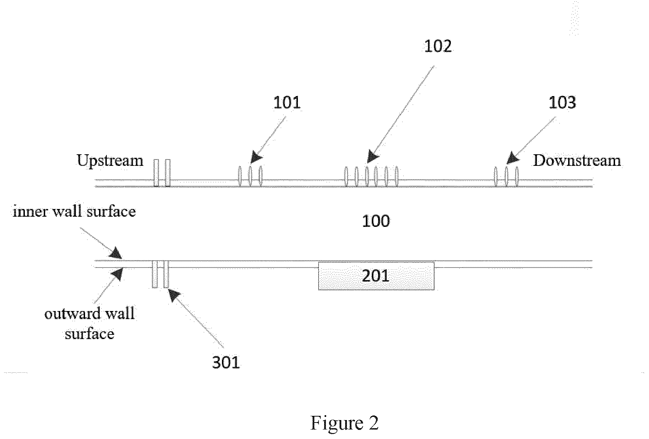

As shown in Fig.2, the measured acoustic liner 201 can be flush with the lower wall surface of the flow duct 100. Since the flow duct 100 usually has a certain thickness, the wall surfaces of the flow duct 100 can comprise an outer wall surface and an inner wall surface. In order to obtain more accurate measurement data, the measured acoustic liner 201 can be completely and closely flush with the inner wall surface of the flow duct 100, and the loudspeaker array 301, the microphone arrays and the pressure probe array 104 can also be arranged on the inner wall surface of the flow duct 100. It should be noted that a gap between the measured acoustic liner 201 and the flow duct 100 in Fig. 2 is only to facilitate the representation of the positional relationship between the measured acoustic liner 201 and the flow duct 100. In practical use, because the sound-absorbing surface of acoustic liner is usually rectangular, when the cross section of the flow duct 100 is rectangular, the sound-absorbing surface of the measured acoustic liner 201 can be completely and closely flush with the lower wall surface of the flow duct 100. In this example, the area of the wall surface where the measured acoustic liner 201 and the test section are in contact depends on the area of the sound-absorbing surface of the measured acoustic liner 201, and the length of the wall surface where the measured acoustic liner 201 and the test section are in contact depends on the length of the measured acoustic liner 201.

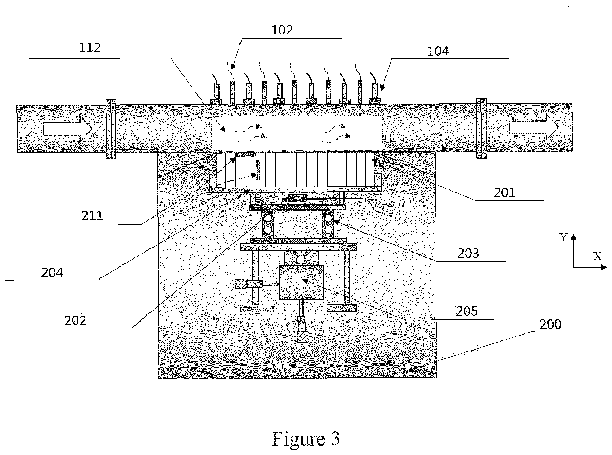

As shown in Fig. 3, the measured acoustic liner 201 is connected to the acceleration transducer 202, so that the vibration response of the measured acoustic liner 201 under high sound intensity can be measured by the acceleration transducer 202. In this case, the acceleration transducer 202 can be located below the measured acoustic liner 201 in the gravity direction, or the acceleration transducer 202 can be not located below the measured acoustic liner 201 in the gravity direction , that is, the acceleration transducer 202 can be located according to the actual needs. The upper part of the drag balance 203 in the gravity direction is connected to the bearing tray 204 and the bearing tray 204 is fixedly connected to the measured acoustic liner 201, so that the drag on the measured acoustic liner 201 can be transmitted to the drag balance 203 through the bearing tray 204 and then the drag borne by the measured acoustic liner 201 can be measured directly through the drag balance 203. In this case, the acceleration transducer 202 can be fixed on the bearing tray 204, and the drag balance 203 can be arranged below the measured acoustic liner 201 and the acceleration transducer 202 in the gravity direction.

In an optional embodiment, the wall surface of the acoustic source section is provided with N loudspeaker arrays 301 and N is an integer not less than 1. For example, N can be 1, 2, 3... N. A loudspeaker array can include M loudspeakers and the M loudspeakers in the loudspeaker array can be arranged on the outer wall surface of the acoustic source section at equal intervals in the circumferential direction of the acoustic source section. For example, M is an integer not less than 1. For example, one loudspeaker array can include 1, 2, 3, 4 or more loudspeakers. In order to more clearly describe the technical solution of this embodiment, Cartesian coordinates (X, Y, Z) are used and all descriptions of directions involved in this disclosure can refer to this coordinate system. In the Cartesian coordinates, X represents axial direction, Y represents vertical direction, Z represents transverse direction, and the vertical direction is the same as the gravity direction. As shown in Fig. 1, when a loudspeaker array includes four loudspeakers, the four loudspeakers can be arranged to surround the wall surface of the acoustic source section. In this example, the coordinates of the four loudspeakers on the X direction are equal. By setting appropriate amplitude and phase, a plurality of loudspeaker arrays can realize the superposition of incident sound wave and the incident sound wave can propagate along the X-direction with airflow, then the incident sound pressure level can reach 150 dB or more in front of (upstream of) the test section. When a plurality of loudspeaker arrays are arranged on the outer wall surface of the acoustic source section, the distance between loudspeaker arrays can be adjusted by a worker according to the actual needs.

As shown in Fig. 3, strain gauges 211 are provided at the perforated plate and at the honeycomb cavity of the measured acoustic liner 201, and the stress of the measured acoustic liner 201 under high sound intensity can be measured through the strain gauges, according to which stress the acoustic and vibration response characteristics of the measured acoustic liner 201 can be evaluated. In an optional embodiment, an adjustment mechanism 205 is disposed in the test chamber 200 and the adjustment mechanism 205 can be arranged below the drag balance 203 in the gravity direction. The adjustment mechanism 205 can translate in any direction of the X-axis, Y-axis and Z-axis, i.e., realize translation in three dimensions X-Y-Z. The movement of the adjustment mechanism 205 can bring the drag balance 203, the acceleration transducer 202 and the measured acoustic liner 201 to move. Then the level of the measured acoustic liner 201 in the X-axis direction can be controlled by adjusting the movement of the adjustment mechanism 205 with accuracy of 0.001 mm. As shown in Fig. 3, the adjustment mechanism 205 can be disposed in the test chamber and the upper part of the adjustment mechanism 205 in the gravity direction can be connected to the drag balance 203.

As shown in Figs. 1 and 2, a first microphone array 101, a second microphone array 102 and a third microphone array 103 are arranged on the wall surface of the test section successively. The first microphone array 101 is arranged in front of (upstream of) the measured acoustic liner 201, and the incident sound pressure level data of the incoming flow can be calculated according to the sound pressure data of the wall surface of the test section measured by the first microphone array 101. The second microphone array 102 is arranged on the wall surface of the test section opposite to the measured acoustic liner 201, or is arranged on the wall surface of the test section adjacent to the measured acoustic liner 201. For example, when the cross section of the flow duct is rectangular, that is, the cross section of the test section is rectangular, the sound-absorbing surface of the measured acoustic liner 201 can be flush with one side wall surface of the test section, and the second microphone array 102 can be arranged on another wall surface of the test section opposite to the measured acoustic liner 201 or adjacent to the measured acoustic liner 201. The acoustic impedance of the measured acoustic liner 201 at the corresponding frequency of the incident sound wave can be obtained according to the sound pressure data of the wall surface of the test section measured by the second microphone array 102. The third microphone array 103 is arranged on the wall surface of the test section behind (downstream of) the measured acoustic liner 201. The sound pressure level data of the sound after passing through the test section corresponding to the measured acoustic liner 201 can be calculated according to the sound pressure data of the wall surface of the test section measured by the third microphone array 103. According to the incident sound pressure level data of the incoming flow and the sound pressure level data of the sound after passing through the test section corresponding to the measured acoustic liner 201, the transmission loss of the measured acoustic liner 201 at the corresponding frequency of the incident sound wave can be calculated. It should be noted that the number of microphones in each of the first 101, second 102, and third 103 microphone arrays can be selected by a worker according to the actual situation, and the distances between the first 101, second 102, and third 103 microphone arrays can also be selected by a worker according to the actual situation. For example, the first microphone array 101 and the third microphone array 103 can include at least two microphones, the number of microphones included in the first microphone array 101 and the third microphone array 103 can be equal, and the second microphone array 102 can include at least 16 microphones.

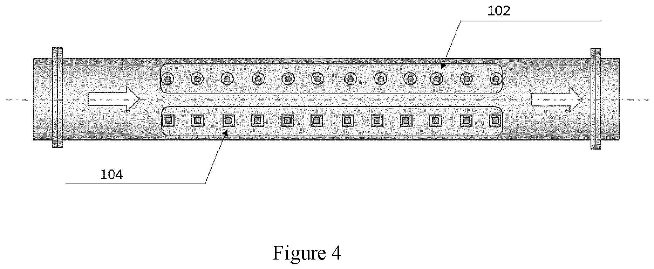

The wall surface of the test section is provided with a pressure probe array 104. The wall surface of the test section opposite to the measured acoustic liner 201 is provided with the pressure probe array 104 or the pressure probe array 104 can be arranged on another wall surface of the test section adjacent to the measured acoustic liner 201. As shown in Fig. 4, when the wall surface of the test section opposite to the measured acoustic liner 201 is provided with the pressure probe array 104 and the second microphone array 102, the pressure probes in the pressure probe array 104 and the microphones in the second microphone array 102 are arranged symmetrically along the central axis of the flow duct 100. As shown in Fig. 4, a circular mark represents a microphone in the second microphone array 102, a rectangular mark represents a pressure probe in the pressure probe array 104, and the pressure probes in the pressure probe array 104 and the microphones in the second microphone array 102 are arranged symmetrically along the central axis of the flow duct 100. For example, the number of probes in the pressure probe array 104 and the number of microphones in the second microphone array 102 can be the same or different. The specific number of probes in the pressure probe array 104 can be selected by a worker according to the actual needs. For example, the number of pressure probes in the pressure probe array 104 can be at least 10. The pressure probes can be used to measure the static pressure of the airflow in the flow duct 100. After gradient processing of the static pressure in the flow direction measured by a plurality of pressure probes, it can be used to evaluate the drag of the measured acoustic liner 201.

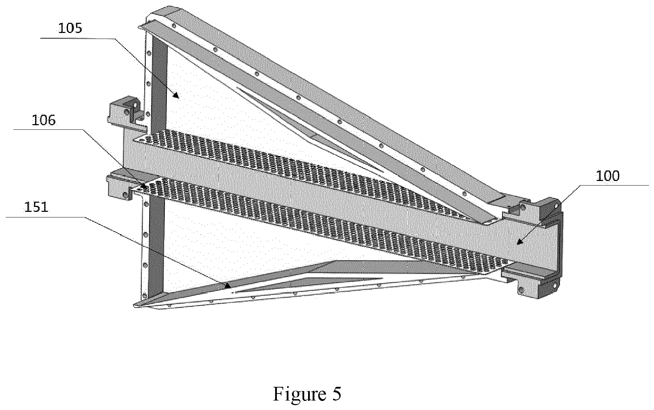

In an optional embodiment, the flow duct 100 can include a first anechoic termination and a second anechoic termination. As shown in Fig. 1, the first anechoic termination can be set upstream of the acoustic source section and the second anechoic termination can be set downstream of the test section, that is, the first anechoic termination and the second anechoic termination can be located at two ends of the flow duct 100 respectively. It should be noted that the first anechoic termination and the second anechoic termination can be pipe units and the first anechoic termination, acoustic source section, test section and second anechoic termination can be spliced to form the flow duct 100. As shown in Fig. 1, the wall surface of each anechoic termination can be provided with at least two symmetrical wedge-shaped structures 105 and sound-absorbing materials can be provided in a cavity of the wedge-shaped structure 105. For example, the cavity of the wedge-shaped structure 105 can be provided with sound absorbing cotton. For example, when the cross section of the flow duct 100 is rectangular, that is, the cross section of the anechoic termination is rectangular, two opposite sides of the anechoic termination each can be provided with a wedge-shaped structure 105 and the two wedge-shaped structures 105 can be arranged symmetrically. In an optional embodiment, four sides of the anechoic terminations each can be provided with a wedge-shaped structure 105, and the four wedge-shaped structures 105 can be arranged symmetrically. As shown in Fig. 5, the outer wall surface of one side of the cavity of the wedge-shaped structure 105 can be a triangular support plate 151 so as to provide good support, and the wedge-shaped structure 105 can be connected to the anechoic termination via a perforated plate 106 with wire mesh. For example, the interface between the wedge-shaped structure 105 and the anechoic termination can be a perforated plate 106 with wire mesh and a large perforation rate, so the incoming background noise can enter the wedge-shaped structure 105 through the perforated plate 106 with wire mesh and can be absorbed in the wedge-shaped structure 105, while the airflow will not enter the wedge-shaped structure 105, so that the airflow background noise can be eliminated or reduced without affecting the flow of the airflow. The perforation rate of the perforated plate 106 can be 40%-60%. For example, the first anechoic termination can be used to reduce or eliminate the incoming noise and the second anechoic termination can be used to form a non-reflective boundary condition at the outlet of the flow duct 100. For example, the perforated plate for the measured acoustic liner 201 can be called the first perforated plate, and the perforated plate 106 with wire mesh at the interface between the wedge-shaped structure 105 and the anechoic termination can be called the second perforated plate.

In an optional embodiment, the comprehensive performance test platform for acoustic liner provided by this embodiment includes a displacement mechanism 107 and a flow rate meter 108. The displacement mechanism 107 includes a first slide rail 171 and a second slide rail 172. The first slide rail 171 and the second slide rail 172 is respectively connected to the flow rate meter 108. The flow rate meter 108 is configured to measure the airflow velocity in the flow duct 100. Both the first slide rail 171 and the second slide rail 172 can be driven by a motor 178 to move the flow rate meter 108. For example, the first slide rail 171 and the second slide rail 172 can be driven respectively by a stepgroovemotor. For example, the first slide rail 171 can slide in the direction of Y-axis and the second slide rail 172 can slide in the direction of Z-axis. When the first slide rail 171 is driven by the motor 178, the movement of the first slide rail 171 can cause the flow rate meter 108 to move in the direction of Y-axis and the accuracy of movement can reach 0.001 mm. When the second slide rail 172 is driven by the motor 178, the movement of the second slide rail 172 can cause the flow rate meter 108 to move in the direction of Z-axis and the accuracy of movement can reach 0.001 mm.

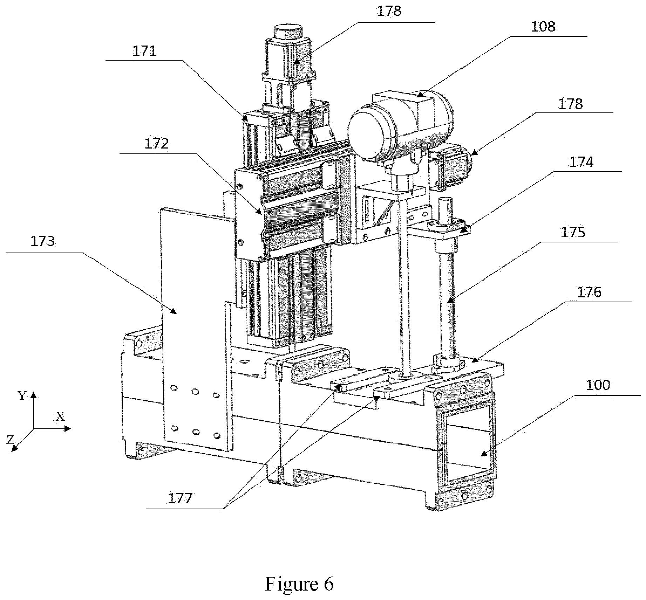

For example, as shown in Fig. 6, the displacement mechanism 107 can further include a support of slide rail 173, a sleeve 174, a connecting rod 175 and a slider 176. When the first slide rail 171 is driven by the motor 178, the movement of the first slide rail 171 can move the second slide rail 172, the sleeve 174 and the flow rate meter 108 in the direction of Y-axis. When the second slide rail 172 is driven by the motor 178, the movement of the second slide rail 172 can drive the first slide rail 171, the sleeve 174 and the flow rate meter 108 to move along the direction of Z-axis. The support of slide rail 173 is configured to support the first slide rail 171 and the second slide rail 172. The support of slide rail 173 can be fixedly connected to the flow duct 100, and the first slide rail 171 and the second slide rail 172 can move relative to the support of slide rail 173 when driven by the motor 178. Lubricating materials such as Teflon can be disposed between the slider 176 and the connecting rod 175. The slider 176 and the connecting rod 175 can be rigidly connected. The sleeve 174 is configured to accommodate the connecting rod 175 when the connecting rod 175 moves along the direction of Y-axis. For example, the surface of the connecting rod 175 can be smooth and there can be a small gap between the connecting rod 175 and the sleeve 174. The surface of the slider 176 can also be smooth, which can ensure smooth sliding between the surface of the slider 176 and the wall surface of the flow duct 100. When the flow rate meter 108 moves in the direction of Z-axis, by moving the slider 176 the rod of the flow rate meter 108 can be prevented from being damaged. As shown in Fig. 6, the slider 176 can be a rectangular block and the flow rate meter 108 can run through the slider 176 and then go into the flow duct 100, so that the airflow velocity/rate in the flow duct 100 can be measured by the flow rate meter 108. When the slider 176 does not need to move, the slider 176 can be fixed by at least two fixing blocks 177. For example, the fixing block 177, the slider 176 and the flow duct 100 can be fixed by screws. When it's need to move the slider 176, the screw can be loosened to loosen the fixed block 177, so as to facilitate the movement of the slider 176.

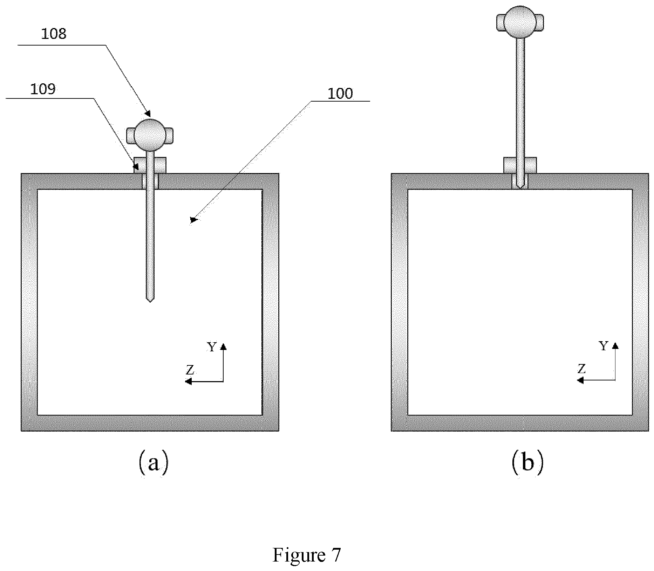

For example, the flow rate meter 108 can be a pitot tube, a hot wire anemometer or a thermal mass flowmeter, and it can be used to measure the airflow velocity in the flow duct 100. Based on the movement of the flow rate meter 108 caused by the first slide rail 171 and the second slide rail 172, airflow velocity through the Y-Z section in the flow duct 100 and boundary layer velocity on the wall surface of the flow duct 100 can be measured by the flow rate meter 108. When it is need to measure the airflow velocity in the flow duct 100, as shown in Fig. 7 (a), the first slide rail 171 and/or the second slide rail 172 can move the flow rate meter 108 to extend into the flow duct 100. When it's not need to measure the airflow velocity in the flow duct 100 or after measuring the airflow velocity in the flow duct 100, as shown in Fig. 7 (b), the first slide rail 171 and/or the second slide rail 172 can move the flow rate meter 108 to extend out of the flow duct 100, so as to avoid the rod of the flow rate meter 108 from affecting the airflow and acoustic wave flow in the flow duct 100. It should be noted that when the first slide rail 171 and/or the second slide rail 172 moves the flow rate meter 108 to extend out of the flow duct 100, it does not mean that the flow rate meter 108 is completely separated from the flow duct 100. As shown in Fig. 7 (b), when the first slide rail 171 and/or the second slide rail 172 moves the flow rate meter 108 to extend out of the flow duct 100, it can be that the tip part of the flow rate meter 108 extends out the airflow channel in the flow duct 100, that is, the flow rate meter 108 extends out of the flow duct 100 means the flow rate meter 108 does not affect the airflow in the flow duct 100. In order to ensure the overall sealing of the comprehensive performance test platform for acoustic liner, a sealing element 109 can be set at the connection between the flow rate meter 108 and the flow duct 100. For example, a sealing ring can be provided at the connection between the flow rate meter 108 and the flow duct 100. It should be noted that Figs. 1 and 7 only show the position of the displacement mechanism 107 and the flow rate meter 108 on the flow duct 100 for example. In practical use, the position of the displacement mechanism 107 and the flow rate meter 108 on the flow duct 100 can be set by a worker according to the actual needs.

In an optional embodiment, the first anechoic termination, the acoustic source section, the test section can be connected with the second anechoic termination through flanges 113 to form the flow duct 100. By connecting the sections with flanges 113, a worker can add or reduce some pipe units or adjust the position of each pipe unit according to the actual needs, which increases the flexibility of the comprehensive performance test platform for acoustic liner provided in this embodiment. The comprehensive performance test platform for acoustic liner provided in this embodiment can further include a bracket 110 and a pedestal 111 to support the flow duct 100 and the parts arranged on the flow duct 100. In order not to affect the flow of airflow in the flow duct 100, it will be better if the contact area between the bracket 110 and the flow duct 100 gets smaller.

In an optional embodiment, another wall surface of the test section adjacent or opposite to the measured acoustic liner 201 can be provided with a watch window 112. For example, when the cross section of the test section is rectangular, the measured acoustic liner 201 and the second microphone array 102 can be arranged on two opposite wall surfaces of the test section respectively and the wall surface of the flow duct 100 between the two opposite wall surfaces can be provided with the watch window 112, or when the second microphone array 102 is arranged on another wall surface of the test section adjacent to the measured acoustic liner 201, the watch window 112 can be arranged on a further wall surface of the test section opposite or adjacent to the measured acoustic liner 201. Exemplary, the second microphone array 102 and the pressure probe array 104 can be arranged on the same wall surface of the test section, but the watch window 112 is generally not set on the same wall surface of the test section as the second microphone array 102 or the pressure probe array 104. Part of the wall surface of the flow duct 100 can be made of a transparent material to form the watch window 112. For example, part of the wall surface of the flow duct 100 can be made of glass to form the watch window 112. Based on the schlieren method or particle image velocimetry (PIV), the micro flow on the sound-absorbing surface of the measured acoustic liner 201 can be observed through the watch window 112.

It should be noted that when the cross section of the flow duct 100 described in the example of this embodiment is rectangular, it means that the cross sections of the first anechoic termination, acoustic source section, test section and second anechoic termination are rectangular. When the cross section of one of the first anechoic termination, acoustic source section, test section and second anechoic termination described in the example of this embodiment is rectangular, it means that all the cross sections of the first anechoic termination, acoustic source section, test section and second anechoic termination are rectangular.

Based on the comprehensive performance test platform for acoustic liner provided by the embodiments of the present disclosure, the stress of the measured acoustic liner 201 under high sound intensity can be measured through the strain gauges 211 arranged on the measured acoustic liner 201, the drag of the measured acoustic liner 201 can be measured through the drag balance 203, and the acoustic performance parameters of the measured acoustic liner 201 can be calculated based on the sound pressure data obtained by the microphone arrays. That is, based on the comprehensive performance test platform for acoustic liner provided by the embodiments of the present disclosure, the stress, the drag and the acoustic performance parameters of the measured acoustic liner 201 can be measured simultaneously, which overcomes the problem of inaccurate experimental data obtained in inconsistent experimental conditions caused by conventional separate acoustic liner experiments.

By setting the first anechoic termination and the second anechoic termination, the background noise of the flow field can be reduced or eliminated without affecting the airflow, and the acoustic reflection at the outlet of the flow duct 100 can be eliminated. By setting loudspeaker array 301 including various numbers of loudspeakers on the acoustic source section and controlling the amplitude and phase of the loudspeakers in the loudspeaker array 301, the sound pressure level of the incident sound wave can be controlled to 150 dB or more on the premise that there is airflow in the flow duct 100. By setting a drag balance 203 below the measured acoustic liner 201 and setting pressure probe on the wall surface of the test section, the drag of the measured acoustic liner 201 can be obtained by both direct measurement and indirect measurement, so the accuracy of the experimental results can be verified. The drag and the acoustic performance of the measured acoustic liner 201 can be measured simultaneously and at the same time, the state of responding acoustic vibration can be monitored, so that the aerodynamic parameters and acoustic parameters of the measured acoustic liner 201 can be obtained under the same working condition, and the acoustic parameters can better reflect the actual situation.

In the description of this specification, the description of the terms "one embodiment/mode", "some embodiments/modes", "examples", "specific examples", or "some examples" means that the specific features, structures, materials, or characteristics described in connection with the embodiment/mode or example are included in at least one embodiment/mode or example of the present disclosure. In this specification, the schematic expression of the above terms does not necessarily refer to the same embodiment/mode or example. Moreover, the specific features, structures, materials, or characteristics described can be combined in any suitable manner in any one or more embodiments/modes or examples. In addition, without contradicting each other, those skilled in the art may combine different embodiments/modes or examples and features of the different embodiments/modes or examples described in this specification.

In addition, the terms "first" and "second" are only used for descriptive purposes and cannot be understood as indicating or implying relative importance or implicitly indicating the number of indicated technical features. The features defining "first" and "second" can include at least one of the features explicitly or implicitly. In the description of this disclosure, "plurality of means at least two, such as two, three, etc., unless otherwise expressly and specifically defined.

## Claims

1. A comprehensive performance test platform for acoustic liner, the test platform comprises a flow duct (100) and a test chamber (200), wherein,
the flow duct (100) is configured to provide a channel for airflow;
the flow duct (100) comprises an acoustic source section and a test section which is located downstream of the acoustic source section;
a wall surface of the acoustic source section is provided with a loudspeaker array (301); the test chamber (200) is arranged on the test section, and the interior of the test chamber (200) is provided with an acoustic liner to be measured (201),
the measured acoustic liner (201) is flush with the wall surface of the test section, the wall surface of the test section upstream of the measured acoustic liner (201) is provided with a first microphone array (101), the wall surface of the test section opposite or adjacent to the measured acoustic liner (201) is provided with a second microphone array (102), and the wall surface of the test section downstream of the measured acoustic liner (201) is provided with a third microphone array (103);
**characterized in that**:
the interior of the test chamber (200) is further provided with an acceleration transducer (202) and a drag balance (203);
the measured acoustic liner (201) is provided with a strain gauge (211) and the measured acoustic liner (201) is connected to the acceleration transducer (202);
the drag balance (203) is connected to a bearing tray (204) and the bearing tray (204) is fixedly connected to the measured acoustic liner;
the wall surface of the test section opposite to the measured acoustic liner (201) is provided with a pressure probe array (104);
the pressure probes in the pressure probe array (104) and the microphones in the second microphone array (102) are arranged symmetrically along the longitudinal central axis of the flow duct (100).

2. The comprehensive performance test platform for acoustic liner according to the claim 1, **characterized in that**,
the wall surface of the acoustic source section is provided with N loudspeaker arrays (301) and N is an integer not less than 1; and
a loudspeaker array (301) comprises M loudspeakers, which are arranged on the wall surface of the acoustic source section in a circumferential direction of the acoustic source section, and M is an integer not less than 1.

3. The comprehensive performance test platform for acoustic liner according to the claim 1, **characterized in that**,
strain gauges (211) are provided at a perforated plate and at a honeycomb cavity of the measured acoustic liner (201).

4. The comprehensive performance test platform for acoustic liner according to the claim 3, **characterized in that**,
an adjustment mechanism (205) is disposed in the test chamber (200) and the adjustment mechanism (205) is connected to the drag balance (203).

5. The comprehensive performance test platform for acoustic liner according to one of the claims 1-4, **characterized in that**,
the flow duct (100) further comprises a first anechoic termination and a second anechoic termination, wherein,
the first anechoic termination is set upstream of the acoustic source section and the second anechoic termination is set downstream of the test section;
the wall surface of each anechoic termination is provided with at least two symmetrical wedge-shaped structures (105) and sound-absorbing materials are provided in a cavity of the wedge-shaped structure (105); and
a perforated plate (106) with wire mesh forms an interface between the wedge-shaped structure (105) and the anechoic termination.

6. The comprehensive performance test platform for acoustic liner according to the claim 5, **characterized in that**, the first anechoic termination, the acoustic source section, the test section and the second anechoic termination are connected through flanges (113).

7. The comprehensive performance test platform for acoustic liner according to the claim 5, **characterized in that**,
the test platform comprises a displacement mechanism (107) and a flow rate meter (108), wherein,
the displacement mechanism (107) comprises a first slide rail (171) and a second slide rail (172),
the first slide rail (171) and the second slide rail (172) are respectively connected to the flow rate meter (108),
the flow rate meter (108) is configured to measure the airflow velocity in the flow duct (100),
when the first slide rail (171) is driven by a motor (178), the first slide rail (171) move the flow rate meter (108) in a first direction; and
when the second slide rail (172) is driven by the motor (178), the second slide rail (172) move the flow rate meter (108) in a second direction.

8. The comprehensive performance test platform for acoustic liner according to the claim 7, **characterized in that**,
when it is need to measure the airflow velocity in the flow duct (100) , the first slide rail (171) and/or the second slide rail (172) causes the flow rate meter (108) to extend into the flow duct (100);
when it is not need to measure the airflow velocity in the flow duct (100), the first slide rail (171) and/or the second slide rail (172) causes the flow rate meter (108) to extend out of the flow duct (100); and
a sealing element (109) is arranged where the flow rate meter (108) and the flow duct (100) are connected.

9. The comprehensive performance test platform for acoustic liner according to the claim 5, **characterized in that**, the wall surface of the test section is provided with a watch window (112).

## Patentansprüche

1. Eine umfassende Leistungsprüfungsplattform für akustische Auskleidungen, wobei die Prüfplattform einen Strömungskanal (100) und eine Prüfkammer (200) umfasst, wobei,
der Strömungskanal (100) so gestaltet ist, dass er einen Kanal für den Luftstrom bildet;
der Strömungskanal (100) einen Schallquellenabschnitt und einen Testabschnitt umfasst, der sich stromabwärts des Schallquellenabschnitts befindet;
eine Wandfläche des Schallquellenabschnitts ist mit einer Lautsprecheranordnung (301) versehen;
die Prüfkammer (200) auf der Prüfstrecke angeordnet ist, und der Innenraum der Prüfkammer (200) mit einer zu messenden akustischen Auskleidung (201) versehen ist,
die gemessene akustische Auskleidung (201) mit der Wandfläche des Prüfabschnitts bündig ist, die Wandfläche des Prüfabschnitts stromaufwärts der gemessenen akustischen Auskleidung (201) mit einem ersten Mikrofonarray (101) versehen ist, die Wandfläche des Prüfabschnitts gegenüber oder neben der gemessenen akustischen Auskleidung (201) mit einem zweiten Mikrofonarray (102) versehen ist und die Wandfläche des Prüfabschnitts stromabwärts der gemessenen akustischen Auskleidung (201) mit einem dritten Mikrofonarray (103) versehen ist;
**dadurch gekennzeichnet**:
der Innenraum der Prüfkammer (200) ist ferner mit einem Beschleunigungsaufnehmer (202) und einer Schleppwaage (203) versehen;
der gemessene akustische Liner (201) ist mit einem Dehnungsmessstreifen (211) versehen und der gemessene akustische Liner (201) ist mit dem Beschleunigungsaufnehmer (202) verbunden;
die Schleppwaage (203) mit einer Lagerschale (204) verbunden ist und die Lagerschale (204) fest mit der gemessenen akustischen Auskleidung verbunden ist;
die der gemessenen akustischen Auskleidung (201) gegenüberliegende Wandfläche des Prüfabschnitts mit einer Drucksondenanordnung (104) versehen ist; die Drucksonden in der Drucksondenanordnung (104) und die Mikrofone in der zweiten Mikrofonanordnung (102) symmetrisch entlang der Längsmittelachse des Strömungskanals (100) angeordnet sind.

2. Die umfassende Leistungstestplattform für akustische Auskleidungen nach Anspruch 1, **dadurch gekennzeichnet, dass**,
die Wandfläche des Schallquellenabschnitts mit N Lautsprecheranordnungen (301) versehen ist und N eine ganze Zahl nicht kleiner als 1 ist; und
ein Lautsprecherarray (301) M Lautsprecher umfasst, die an der Wandfläche des Schallquellenabschnitts in einer Umfangsrichtung des Schallquellenabschnitts angeordnet sind, und M eine ganze Zahl nicht kleiner als 1 ist.

3. Die umfassende Leistungstestplattform für akustische Auskleidungen nach Anspruch 1, **dadurch gekennzeichnet, dass**,
Dehnungsmessstreifen (211) sind an einer Lochplatte und an einem Wabenhohlraum der gemessenen akustischen Auskleidung (201) angebracht.

4. Die umfassende Leistungstestplattform für akustische Auskleidungen nach Anspruch 3, **dadurch gekennzeichnet, dass**,
ein Einstellmechanismus (205) in der Prüfkammer (200) angeordnet ist und der Einstellmechanismus (205) mit der Schleppwaage (203) verbunden ist.

5. Die umfassende Leistungstestplattform für akustische Auskleidung nach einem der Ansprüche 1-4, **dadurch gekennzeichnet, dass**,
der Strömungskanal (100) ferner einen ersten schalltoten Abschluss und einen zweiten schalltoten Abschluss umfasst, wobei,
der erste schalltote Abschluss ist stromaufwärts des Schallquellenabschnitts und der zweite schalltote Abschluss ist stromabwärts des Prüfabschnitts angeordnet;
die Wandfläche jedes schalltoten Abschlusses mit mindestens zwei symmetrischen keilförmigen Strukturen (105) versehen ist und schallabsorbierende Materialien in einem Hohlraum der keilförmigen Struktur (105) vorgesehen sind; und
eine perforierte Platte (106) mit Drahtgeflecht bildet eine Schnittstelle zwischen der keilförmigen Struktur (105) und dem schalltoten Abschluss.

6. Die umfassende Leistungstestplattform für akustische Auskleidung nach Anspruch 5, **dadurch gekennzeichnet, dass** der erste schalltote Abschluss, der Schallquellenabschnitt, der Testabschnitt und der zweite schalltote Abschluss durch Flansche (113) verbunden sind.

7. Die umfassende Leistungstestplattform für akustische Auskleidungen nach Anspruch 5, **dadurch gekennzeichnet, dass**,
die Testplattform einen Verdrängungsmechanismus (107) und einen Durchflussmengenmesser (108) umfasst, wobei,
der Verschiebemechanismus (107) eine erste Gleitschiene (171) und eine zweite Gleitschiene (172) umfasst,
die erste Gleitschiene (171) und die zweite Gleitschiene (172) sind jeweils mit dem Durchflussmengenmesser (108) verbunden,
der Durchflussmesser (108) so konfiguriert ist, dass er die Luftströmungsgeschwindigkeit in dem Strömungskanal (100) misst,
wenn die erste Gleitschiene (171) von einem Motor (178) angetrieben wird, bewegt die erste Gleitschiene (171) den Durchflussmesser (108) in eine erste Richtung; und
wenn die zweite Gleitschiene (172) durch den Motor (178) angetrieben wird, bewegt die zweite Gleitschiene (172) den Durchflussmesser (108) in eine zweite Richtung.

8. Die umfassende Leistungstestplattform für akustische Auskleidungen nach Anspruch 7, **dadurch gekennzeichnet, dass**,
wenn die Luftströmungsgeschwindigkeit im Strömungskanal (100) gemessen werden muss, bewirkt die erste Gleitschiene (171) und/oder die zweite Gleitschiene (172), dass der Durchflussmesser (108) in den Strömungskanal (100) hineinragt;
wenn es nicht erforderlich ist, die Luftstromgeschwindigkeit in dem Strömungskanal (100) zu messen, die erste Gleitschiene (171) und/oder die zweite Gleitschiene (172) bewirkt, dass der Durchflussmesser (108) aus dem Strömungskanal (100) herausragt; und
ein Dichtelement (109) an der Stelle angeordnet ist, an der der Durchflussmesser (108) und der Durchflusskanal (100) verbunden sind.

9. Die umfassende Leistungsprüfplattform für akustische Auskleidungen nach Anspruch 5, **dadurch gekennzeichnet, dass** die Wandfläche des Prüfabschnitts mit einem Beobachtungsfenster (112) versehen ist.

## Revendications

1. Une plate-forme d'essai de performance complète pour un revêtement acoustique, la plate-forme d'essai comprend un conduit d'écoulement (100) et une chambre d'essai (200), dans laquelle,
le conduit d'écoulement (100) est configuré pour fournir un canal pour l'écoulement de l'air ;
le conduit d'écoulement (100) comprend une section de source acoustique et une section d'essai située en aval de la section de source acoustique ;
une surface murale de la section de la source acoustique est pourvue d'un réseau de haut-parleurs (301) ;
la chambre d'essai (200) est disposée sur la section d'essai, et l'intérieur de la chambre d'essai (200) est pourvu d'un revêtement acoustique à mesurer (201),
le revêtement acoustique mesuré (201) affleure la surface de la paroi de la section d'essai, la surface de la paroi de la section d'essai en amont du revêtement acoustique mesuré (201) est pourvue d'un premier réseau de microphones (101), la surface de la paroi de la section d'essai opposée ou adjacente au revêtement acoustique mesuré (201) est pourvue d'un deuxième réseau de microphones (102), et la surface de la paroi de la section d'essai en aval du revêtement acoustique mesuré (201) est pourvue d'un troisième réseau de microphones (103) ;
caractérisé dans ce domaine :
l'intérieur de la chambre d'essai (200) est en outre équipé d'un transducteur d'accélération (202) et d'une balance de traînée (203) ;
le manchon acoustique mesuré (201) est équipé d'une jauge de contrainte (211) et le manchon acoustique mesuré (201) est connecté au transducteur d'accélération (202) ;
la balance de traînée (203) est reliée à un plateau de roulement (204) et le plateau de roulement (204) est relié de manière fixe au revêtement acoustique mesuré ;
la surface de la paroi de la section d'essai opposée au revêtement acoustique mesuré (201) est pourvue d'un réseau de sondes de pression (104) ; les sondes de pression du réseau de sondes de pression (104) et les microphones du deuxième réseau de microphones (102) sont disposés symétriquement le long de l'axe central longitudinal du conduit d'écoulement (100).

2. La plate-forme d'essai de performance complète pour le revêtement acoustique selon la revendication 1, **caractérisée par le fait que**,
la surface de la paroi de la section de la source acoustique est pourvue de N réseaux de haut-parleurs (301) et N est un nombre entier supérieur ou égal à 1 ; et
un réseau de haut-parleurs (301) comprend M haut-parleurs, qui sont disposés sur la surface de la paroi de la section de la source acoustique dans une direction circonférentielle de la section de la source acoustique, et M est un nombre entier non inférieur à 1.

3. La plate-forme d'essai de performance complète pour le revêtement acoustique selon la revendication 1, **caractérisée par le fait que**,
Des jauges de contrainte (211) sont placées sur une plaque perforée et dans une cavité en nid d'abeille du revêtement acoustique mesuré (201).

4. La plate-forme d'essai de performance complète pour le revêtement acoustique selon la revendication 3, **caractérisée par le fait que**,
un mécanisme de réglage (205) est disposé dans la chambre d'essai (200) et le mécanisme de réglage (205) est relié à la balance à traînée (203).

5. La plate-forme d'essai de performance complète pour le revêtement acoustique selon l'une des revendications 1 à 4, **caractérisée par le fait que**,
le conduit d'écoulement (100) comprend en outre une première terminaison anéchoïque et une seconde terminaison anéchoïque, dans lesquelles,
la première terminaison anéchoïque est placée en amont de la section de la source acoustique et la seconde terminaison anéchoïque est placée en aval de la section d'essai ;
la surface de la paroi de chaque terminaison anéchoïque est pourvue d'au moins deux structures symétriques en forme de coin (105) et des matériaux absorbant le son sont placés dans une cavité de la structure en forme de coin (105) ; et
une plaque perforée (106) avec un treillis métallique forme une interface entre la structure en forme de coin (105) et la terminaison anéchoïque.

6. La plate-forme d'essai de performance globale pour revêtement acoustique selon la revendication 5, **caractérisée par le fait que** la première terminaison anéchoïque, la section de source acoustique, la section d'essai et la deuxième terminaison anéchoïque sont reliées par des brides (113).

7. La plate-forme d'essai de performance complète pour le revêtement acoustique selon la revendication 5, **caractérisée par le fait que**,
la plate-forme d'essai comprend un mécanisme de déplacement (107) et un débitmètre (108), dans lequel,
le mécanisme de déplacement (107) comprend une première glissière (171) et une seconde glissière (172),
la première glissière (171) et la seconde glissière (172) sont respectivement reliées au débitmètre (108),
le débitmètre (108) est configuré pour mesurer la vitesse du flux d'air dans le conduit d'écoulement (100),
lorsque la première glissière (171) est entraînée par un moteur (178), la première glissière (171) déplace le débitmètre (108) dans une première direction ; et
lorsque la seconde glissière (172) est entraînée par le moteur (178), la seconde glissière (172) déplace le débitmètre (108) dans une seconde direction.

8. La plate-forme d'essai de performance complète pour le revêtement acoustique selon la revendication 7, **caractérisée par le fait que**,
lorsqu'il est nécessaire de mesurer la vitesse du flux d'air dans le conduit d'écoulement (100), la première glissière (171) et/ou la seconde glissière (172) permettent au débitmètre (108) de s'étendre dans le conduit d'écoulement (100) ;
lorsqu'il n'est pas nécessaire de mesurer la vitesse du flux d'air dans le conduit d'écoulement (100), la première glissière (171) et/ou la seconde glissière (172) font sortir le débitmètre (108) du conduit d'écoulement (100) ; et
un élément d'étanchéité (109) est disposé à l'endroit où le débitmètre (108) et le conduit d'écoulement (100) sont connectés.

9. La plate-forme d'essai de performance globale pour le revêtement acoustique selon la revendication 5, **caractérisée par le fait que** la surface de la paroi de la section d'essai est pourvue d'une fenêtre d'observation (112).
